# EUROPÄISCHE PATENTSCHRIFT

(11) **EP 0 544 658 B1**
(45) Veröffentlichungstag und Bekanntmachung des Hinweises auf die Patenterteilung: **19.10.1994**
(21) Anmeldenummer: 90912634.4
(22) Anmeldetag: 25.08.1990
(51) Int. Cl.: B23D 77/04

(54) **SCHNEIDWERKZEUG FÜR DIE BEARBEITUNG VON INNEN- UND AUSSENKONTUREN AN WERKSTÜCKEN**
CUTTING TOOL FOR MACHINING THE INTERNAL AND EXTERNAL PROFILES OF WORKPIECES
OUTIL DE COUPE SERVANT A USINER LES CONTOURS INTERIEURS ET EXTERIEURS DE PIECES A USINER

(43) Veröffentlichungstag der Anmeldung: 09.06.1993
(73) Patentinhaber: MAPAL Fabrik für Präzisionswerkzeuge Dr. Kress KG, D-73431 Aalen (DE)
(72) Erfinder: FEES, Heiner, D-7120 Bietigheim-Bissingen (DE); GOETZ, Manfred, D-8540 Schwabach (DE)
(74) Vertreter: Gleiss, Alf-Olav, Dr.jur. Dipl.-Ing.
(86) Internationale Anmeldenummer: DE9000651
(87) Internationale Veröffentlichungsnummer: WO9203245

(56) Entgegenhaltungen:
- DE-C- 3 201 508
- GB-A- 2 063 732

## Beschreibung

Die Erfindung geht aus von einem Schneidwerkzeug nach der Gattung des Hauptanspruchs. Bei einem bekannten Schneidwerkzeug dieser Gattung (DE-PS 32 01 508) sind zum Einjustieren der Schneidplatte und zu deren Festklemmen an der Stützschulter des Werkzeuggrundkörpers je ein eigenes Schraubelement vorgesehen. Die Schneidplatte ist an einer Spannpratze angeordnet, die um eine axial und radial zur Schneidplatte versetzte Achse drehbar am Werkzeuggrundkörper gelagert ist. Die radiale Einjustierung der Schneidplatte gegenüber der Werkzeugachse erfolgt durch Drehen der Spannpratze gegenüber dem Werkzeuggrundkörper, wobei zwangsläufig auch die Winkelstellung der Schneidplatte gegenüber der Werkzeugachse verändert wird. Zum Festklemmen der Schneidplatte bzw. -kante an der Stützschulter des Werkzeuggrundkörpers wird die Spannpratze im rechten Winkel gegen die Stützschulter gezogen, wonach die Schneidplatte durch Reibungsschluß am Werkzeuggrundkörper festgehalten ist. Diese Ausführung benötigt verhältnismäßig viel Platz und ist daher für Werkzeuge ungeeignet, mit denen sehr kleine Bohrungen bearbeitet werden sollen. Ferner eignet sich die bekannte Anordnung auch nicht für eine Hochgeschwindigkeitsbearbeitung, weil die Schneidplatte gegen radiales Herausfliegen aus dem sich drehenden Werkzeug nicht formschlüssig am Werkzeuggrundkörper festgehalten ist.

### Vorteile der Erfindung

Die erfindungsgemäße Anordnung mit den kennzeichnenden Merkmalen des Hauptanspruchs zeichnet sich durch einen besonders kompakten Aufbau aus, bei welchem grundsätzlich nur eine Stellschraube zum Justieren und eine Spannmutter zum Festklemmen der Schneidplatte benötigt wird, und welcher daher die Möglichkeit einer Miniaturisierung des Werkzeugs und der Präzisionsbearbeitung von Bohrungen mit kleinem Durchmesser eröffnet.

Durch die in den Unteransprüchen angegebenen Maßnahmen sind vorteilhafte Weiterbildungen der Anordnung nach dem Hauptanspruch möglich.

Eine formschlüssige Befestigung der Schneidplatte am Werkzeuggrundkörper läßt sich bei Ausbildung des Werkzeugs gemäß den Merkmalen des Anspruchs 2 erreichen. Ein derart ausgebildetes Werkzeug ist für eine Hochgeschwindigkeitsbearbeitung geeignet, weil die bei rotierendem Werkzeug auf die Schneidkante einwirkende Fliehkraft gegen die axiale Spannschulter der Stellschraube wirkt, wodurch der Formschluß sicher erhalten bleibt. Die Schneidplatte kann so gestaltet sein, daß der an ihrem Massenschwerpunkt angreifende Fliehkraftvektor durch den Bereich der Stützschulter des Werkzeuggrundkörpers geht. Ferner ergibt sich der Vorteil, daß nach dem Lösen der Spannmutter die Schneidplatte aus dem Plattensitz herausgekippt und entnommen werden kann, ohne daß die Stellschrauben und Spannmuttern vom Werkzeuggrundkörper völlig gelöst werden müssen.

Die Merkmale der Ansprüche 3 bis 5 ergeben ein Werkzeug, bei welchem die Stellschraube und die Spannmutter leicht zugänglich sind und welches daher beim Auswechseln, Einjustieren und Festklemmen einer Schneidplatte besonders einfach handhabbar ist.

Die Schneidplatte kann gegen Drehen um eine senkrecht auf der Stützschulter des Werkzeuggrundkörpers stehende Achse beispielsweise durch Schultern am Werkzeuggrundkörper, die mit den Stirnseiten der Schneidplatte zusammenwirken, festgehalten werden. Insbesondere bei längeren Schneidplatten kann es jedoch gemäß Anspruch 6 vorteilhaft sein, wenn zu ihrem Einjustieren und Festklemmen zwei Stellschrauben nebeneinander vorgesehen werden. In diesem Fall kann auch durch unterschiedliches Einstellen der Stellschrauben die Schneidkante der Schneidplatte in einem begrenzten Maß schräg zur Werkzeugachse eingestellt werden.

Bei Werkzeugen für die Bearbeitung von Stufenbohrungen kann vorteilhaft eine axiale Einstellung der Schneidplatte durch die Merkmale des Anspruchs 7 erreicht werden.

### Zeichnung

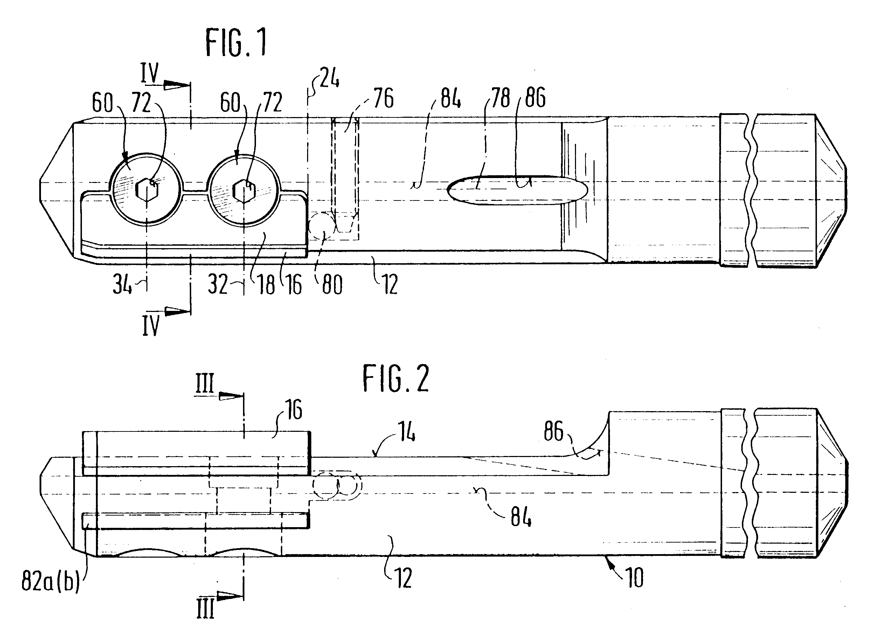

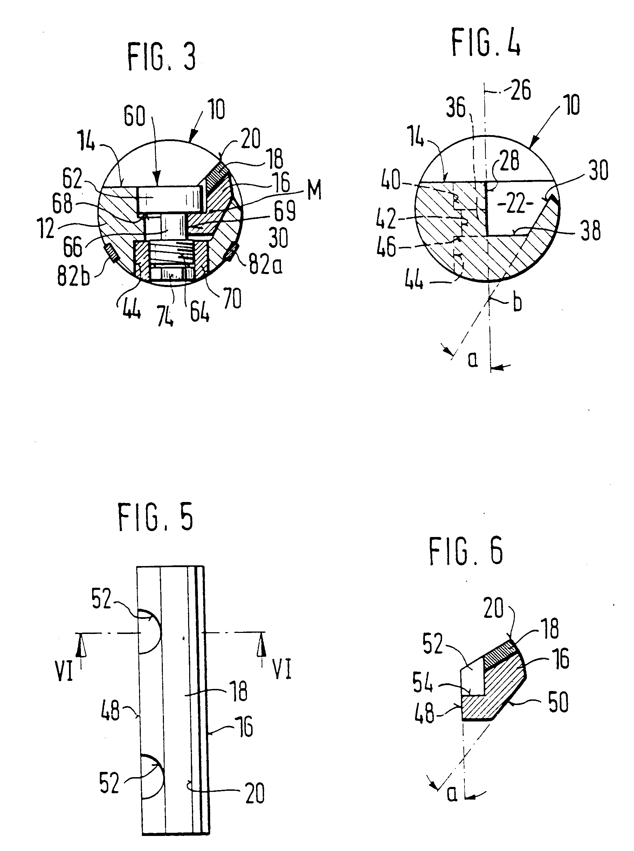

Ein Ausführungsbeispiel der Erfindung ist in der Zeichnung in vergrößertem Maßstab dargestellt und in der nachfolgenden Beschreibung näher erläutert. Es zeigen Figur 1 eine Draufsicht auf ein Reibwerkzeug bzw. Feinbohrwerkzeug mit einer durch zwei Stellschrauben justierten und befestigten Schneidplatte, Figur 2 eine Seitenansicht des Werkzeugs nach Figur 1, Figur 3 einen Schnitt nach der Linie III-III in Figur 2, Figur 4 einen Schnitt durch die Bohrstange des Werkzeugs nach der Linie IV-IV in Figur 1, Figur 5 eine Draufsicht auf die Schneidplatte des Bohrwerkzeugs und Figur 6 einen Schnitt nach der Linie VI-VI in Figur 5.

### Beschreibung des Ausführungsbeispiels

Das Werkzeug hat als Grundkörper eine Bohrstange 10, deren vorderer Endabschnitt 12 mit einer Abflachung 14 versehen ist und eine Schneidplatte 16 trägt, die durch die nachstehend beschriebenen Mittel auswechselbar an der Bohrstange 10 befestigt ist. Die Schneidplatte 16 ist als Träger für eine Schneidleiste 18 aus hochverschleißfestem Werkstoff ausgebildet, die an der Schneidplatte 16 starr oder gegebenenfalls auch auswechselbar, beispielsweise über eine Schwalbenschwanzführung, befestigt ist. Die Schneidplatte 16 könnte jedoch auch selbst aus verschleißfestem Werkstoff bestehen und unmittelbar die Schneidleiste bilden bzw. eine Schneidkante 20 aufweisen.

Die Bohrstange 10 ist im Bereich der Abflachung 14 mit einer Vertiefung 22 (Figur 4) versehen, die in der Querschnittsebene 24 (Figur 1) der Bohrstange 10 beginnt und bis an deren vorderes Ende reicht. Die Vertiefung 22 ist von einer mindestens annähernd in einer Diagonalebene 26 liegenden Längswand 28 und auf der anderen Seite von einer Längswand 30 begrenzt, die in einem spitzen Winkel a zur Diagonalebene 26 angeordnet ist und eine Stützschulter für die Schneidplatte 16 bildet. Zusätzlich zur längs gestreckten Vertiefung 22 sind an den Querschnittsebenen 32 und 34 (Figur 1) der Bohrstange 10 je ein von der Abflachung 14 ausgehender und an der gegenüberliegenden Umfangswand der Bohrstange 10 ausmündender Durchbruch 36 vorgesehen, der oberhalb der Bodenwand 38 der Vertiefung 22 je einen halbzylindrischen Abschnitt 40 größeren Durchmessers und daran anschließend einen halbzylindrischen Abschnitt 42 kleineren Durchmessers hat und unterhalb der Bodenwand 38 einen vollzylindrischen Bohrungsabschnitt 44 bildet. Dieser geht an einer Spannschulter 46 in den halbzylindrischen Abschnitt 42 des Durchbruches 36 über.

Die Schneidplatte 16 ist ein prismatischer Körper, der in Längsrichtung u. a. von zwei Seitenwänden 48, 50 begrenzt ist, die in gleichem Winkel a zueinander angeordnet sind wie die Längswände 28, 30 der Vertiefung 22 in der Bohrstange 10. An zwei Stellen, deren axialer Abstand dem Abstand der beiden Querschnittsebenen 32, 34 der Bohrstange 10 entspricht, ist die Schneidplatte 16 mit halbzylindrischen Aussparungen 52 versehen, die von oben herunter bis zu einer Spannschulter 54 reichen. Der Halbmesser der Aussparungen 52 entspricht dem Halbmesser der Abschnitte 40 der Durchbrüche 36 in der Bohrstange 10, so daß sich die paarweise gegenüberliegenden Abschnitte 40 und Aussparungen 52 je zu zylindrischen Taschen ergänzen, wenn die Schneidplatte 16 in die Vertiefung 22 der Bohrstange 10 eingesetzt ist und mit ihrer Seitenwand 50 an der Längswand 30 der Vertiefung 22 anliegt.

Zum Justieren und Festklemmen der Schneidplatte 16 sind zwei Stellschrauben 60 vorgesehen, die je einen Kopf 62, einen konzentrisch angeordneten Gewindeabschnitt 64 und einen dazwischenliegenden exzentrischen Schaftabschnitt 66 haben, der oben an einer Ringschulter 68 in den Kopf 62 übergeht und dessen exzentrische Umfangsfläche eine Spannschulter 69 bildet. Der Gewindeabschnitt 64 greift in eine Spannmutter 70 ein, die im Bohrungsabschnitt 44 des Durchbruchs 36 drehbar gelagert ist und sich an der Spannschulter 46 abstützt. Im Kopf 62 der Stellschrauben 60 ist je ein Vertiefung 72 zum passenden Eingriff eines Schlüsselssechskants vorgesehen; die Spannmuttern 70 sind am unteren Innenrand ebenfalls mit Angriffsflächen 74 für ein Werkzeug zum Drehen der Spannmuttern versehen. Zum axialen Verstellen der Schneidplatte 16 ist eine Stellschraube 76 vorgesehen, die in einer quer zur Werkzeugachse 78 angeordneten Gewindebohrung gelagert ist und über eine Kugel 80 gegen die Schneidplatte 16 drückt.

Die Bohrstange 10 ist im Bereich der Schneidplatte 16 mit zwei Führungsleisten 82a und 82b versehen, die wie die Schneidkante 20 geringfügig über die Mantelfläche der Bohrstange 10 radial hervortreten und die Bohrstange 10 in der Bohrung führen. Die der Schneidkante 20 diametral gegenüberliegende Führungsleiste 82b bestimmt außerdem durch ihren Abstand zur Schneidkante 20 den Durchmesser der zu fertigenden Bohrung. Über die Führungsleiste 82a wird der Bearbeitungsdruck abgefangen und unmittelbar auf das Werkstück übertragen. Anstelle von eingesetzten Führungsleisten könnten auch einzelne Umfangsabschnitte der Bohrstange selbst die Führung übernehmen, die zwischen segmentartigen Flächenanschliffen an der Bohrstange 10 gebildet sind. In der Bohrstange 10 sind Kanäle 84, 86 zum Zuführen von Kühlflüssigkeit zur Schneidleiste 18 und Abführen von Schneidspänen vorgesehen.

Zum Einsetzen, Einstellen und Festklemmen der Schneidplatte 16 werden die beiden Stellschrauben 60 zunächst unter Festhalten der Spannmuttern 70 soweit nach oben gedreht, daß die Schneidplatte 16 unter die Köpfe 62 der Stellschrauben 60 eingeschwenkt und an die die Stützschulter bildende Längswand 30 der Bohrstange 10 angelegt werden kann. Sodann kann durch Drehen der Stellschrauben 60 die Höhenlage der Schneidplatte 16 an der Längswand 30 und damit der radiale Abstand der Schneidkante 20 von der Werkzeugachse und gegebenenfalls auch der Winkel zur Werkzeugachse verändert und auf gewünschte Werte eingestellt werden. Diese Werte hängen von den radialen Abständen der an den exzentrischen Schaftabschnitten 66 der Stellschrauben 60 gebildeten Spannschultern 69 von den Schraubenachsen (Diagonalebene 26, Figur 4) ab, welche die Schneidplatte 16 mehr oder weniger weit von den Schraubenachsen abdrücken und dabei auf der Längswand 30 nach oben schieben.

Zum Einstellen oder Voreinstellen der gewünschten Schneidleistenlage gegenüber der Werkzeugachse kann die Bohrstange 10 zwischen zwei in die beiden Mündungen des Kanals 84 eingreifende Spitzen eines Einstellgerätes aufgenommen und das Einstellmaß durch zwei Meßuhren überprüft werden. Wenn die Stellschrauben 60 in die vorgeschriebene Drehstellung gebracht sind, werden die Spannmuttern 70 unter Festhalten der Stellschrauben 60 fest angezogen. Dabei pressen die axialen Spannschultern 68 an den Stellschrauben 60 die Schneidplatte 16 fest an die Längswand 30 der Bohrstange 10 an. Der in Figur 3 durch den Punkt M gekennzeichnete Massenschwerpunkt der Schneidplatte 16 samt Schneidleiste 18 ist so gewählt, daß der an ihm angreifende Fliegkraftvektor durch den Bereich der Längswand 30 der Bohrstange 10 geht.

Als Einstellungshilfe könnten an den Stellschrauben 60 und an den sie umgebenden Oberflächenbereichen der Bohrstange 10 Markierungen vorgesehen sein. Ferner könnten Anschläge an den Stellschrauben 60 und der Bohrstange 10 vorgesehen sein, die den Einstellbereich der Stellschrauben 60 begrenzen.

Die erfindungsgemäße Schneidplattenbefestigung kann selbstverständlich auch bei Mehrfach- bzw. Stufenwerkzeugen für die gleichzeitige Bearbeitung von Innen- und Außenkonturen an Werkstücken vorgesehen sein.

## Patentansprüche

1. Schneidwerkzeug für die Bearbeitung von Innen- und Außenkonturen an Werkstücken, mit mindestens einer an einem Werkzeuggrundkörper auswechselbar befestigten Schneidplatte, welche durch eine Stellschraube radial zur Werkzeugachse einjustierbar und durch Spannmittel an einer dem Bearbeitungsdruck aufnehmenden Stützschulter des Werkzeuggrundkörpers festklemmbar ist, dadurch gekennzeichnet, daß die Stellschraube (60) zum radialen Einjustieren der Schneidplatte (16, 18) zugleich ein Spannmittel zum Festklemmen der Schneidplatte (16, 18) an der Stützschulter (30) des Werkzeuggrundkörpers (10) bildet.

2. Schneidwerkzeug nach Anspruch 1, gekennzeichnet durch folgende Merkmale:
a) Die Stellschraube (60) ist im spitzen Winkel (a) zur Stützschulter (30) des Werkzeuggrundkörpers (10) angeordnet und greift in eine Spannmutter (70) ein, die drehbar, jedoch in einer Richtung axial abgestützt am Werkzeuggrundkörper (10) gelagert ist,
b) die Stellschraube (60) ist mit einer der Winkelspitze (b) zugekehrten axialen Spannschulter (68) versehen, die gegen eine der Winkelöffnung zugekehrte axiale Gegenschulter (54) der an der Stützschulter (30) anliegenden Schneidplatte (16, 18) drückt, und
c) die Stellschraube (60) ist mit einem exzentrisch zur Schraubenachse angeordneten Längsabschnitt (66) versehen, dessen exzentrische Umfangsfläche eine radiale Spannschulter (69) bildet, welche gegen eine parallel zur Schraubenachse verlaufende radiale Gegenschulter (48) der an der Stützschulter (30) anliegenden Schneidplatte (16, 18) drückt.

3. Schneidwerkzeug nach Anspruch 2, dadurch gekennzeichnet, daß die Spannmutter (70) an dem der Winkelspitze (b) zugeordneten Ende der Stellschraube (60) angeordnet und in Richtung der Winkelöffung axial am Werkzeugrundkörper (10) abgestützt ist.

4. Schneidwerkzeug nach Anspruch 3, dadurch gekennzeichnet, daß die Spannmutter (70) in einer nach außen offenen, zylindrischen Ausnehmung (44) des Werkzeuggrundkörpers (10) eingelagert ist.

5. Schneidewerkzeug nach einem der Ansprüche 2 bis 4, dadurch gekennzeichnet, daß die axiale Spannschulter (68) der Stellschraube (60) gebildet ist am Übergang eines mit Angriffsflächen (72) für ein Einstellwerkzeug versehenen Schraubenkopfes (62) zu einem die radiale Spannschulter (69) bildenden exzentrischen Schaftabschnitt (66).

6. Schneidwerkzeug nach einem der vorhergehenden Ansprüche, dadurch gekennzeichnet, daß zum Einjustieren und Festklemmen einer länglichen Schneidplatte (16, 18) zwei nebeneinander angeordnete Stellschrauben (60) vorgesehen sind.

7. Schneidwerkzeug nach einem der vorhergehenden Ansprüche, dadurch gekennzeichnet, daß die Schneidplatte (16, 18) über ein quer zur Längserstreckung des Werkzeugrundkörpers (10) in diesem drehbar gelagertes Stellelement (76) und eine die Querbewegung in eine Längsbewegung umwandelndes Element (80), vorzugsweise eine Kugel, in Achsrichtung einjustierbar ist.

## Claims

1. A cutting tool for machining the inner and outer contours of workpieces, having at least one cutting plate which is exchangeably secured to a tool base body and which can be adjusted radially with respect to the tool axis by an adjusting screw and can be clamped firmly by clamping means to a support shoulder of the tool base body, the support shoulder taking up the machining pressure, characterized in that the adjusting screw (60) for radially adjusting the cutting plate (16, 18) at the same time forms a clamping means for clamping the cutting plate (16, 18) firmly to the support shoulder (30) of the tool base body (10).

2. A cutting tool according to Claim 1, characterized by the following features:
a) the adjusting screw (60) is arranged at an acute angle (a) to the support shoulder (30) of the tool base body (10) and engages in a clamping nut (70) which is mounted on the tool base body (10) rotatably but axially supported in one direction,
b) the adjusting screw (60) is provided with an axial clamping shoulder (68) facing the angle tip (b) and pressing against an axial counter-nut (54), facing the angle opening, of the cutting plate (16, 18) bearing against the support shoulder (30), and
c) the adjusting screw (60) is provided with a longitudinal portion (66) which is arranged eccentrically with respect to the screw axis and whereof the eccentric peripheral face forms a radial clamping shoulder (69) which presses against a radial counter-shoulder (48), running parallel to the screw axis, of the cutting plate (16, 18) bearing against the support shoulder (30).

3. A cutting tool according to Claim 2, characterized in that the clamping nut (70) is arranged at the end of the adjusting screw (60) associated with the angle tip (b) and is supported axially on the tool base body (10) in the direction of the angle opening.

4. A cutting tool according to Claim 3, characterized in that the clamping nut (70) is mounted within an outwardly open, cylindrical cutout (44) in the tool base body (10).

5. A cutting tool according to one of Claims 2 to 4, characterized in that the axial clamping shoulder (68) of the adjusting screw (60) is formed at the transition of a screw head (62), provided with engagement faces (72) for an adjustment tool, to an eccentric shaft portion (66) forming the radial clamping shoulder (69).

6. A cutting tool according to one of the preceding claims, characterized in that two mutually adjacent adjusting screws (60) are provided for adjusting and firmly clamping an elongate cutting plate (16, 18).

7. A cutting tool according to one of the preceding claims, characterized in that the cutting plate (16, 18) is adjustable in the axial direction by way of an adjusting element (76) mounted transversely with respect to the longitudinal extent of the tool base body (10) and rotatably therein, and an element, preferably a ball (80), converting the transverse movement into a longitudinal movement.

## Revendications

1. Outil de coupe servant à usiner les contours intérieurs et extérieurs de pièces à usiner, comprenant au moins une plaque de coupe fixée à un corps porte-outils de manière à pouvoir être remplacée, qui peut être ajustée radialement par rapport à l'axe de l'outil à l'aide d'une vis de réglage et bloquée par des moyens de serrage sur un épaulement d'appui du corps porte-outils qui reçoit la pression d'usinage, caractérisé en ce que la vis de réglage (60) pour ajuster radialement la plaque de coupe (16, 18) forme en même temps un moyen de serrage pour bloquer la plaque de coupe (16, 18) sur l'épaulement d'appui (30) de corps porte-outils (10).

2. Outil de coupe selon la revendication 1, caractérisé par les caractéristiques suivantes :
a) La vis de réglage (60) est disposée avec un angle aigu (a) par rapport à l'épaulement d'appui (30) du corps porte-outils (10) et se met en prise avec un écrou de serrage (70) qui est monté sur le corps porte-outils (10) de manière à pouvoir tourner tout en prenant appui axialement dans un sens,
b) la vis de réglage (60) est munie d'un épaulement de serrage (68) axial qui est tourné vers la pointe de l'angle (b) et qui appuie sur un contre-épaulement (54) axial tourné vers l'ouverture de l'angle de la plaque de coupe (16, 18) qui est appliquée contre l'épaulement d'appui (30), et
c) la vis de réglage (60) est munie d'une partie longitudinale (66) disposée de façon excentrique par rapport à l'axe de la vis, dont la surface latérale excentrique forme un épaulement de serrage (69) radial qui appuie sur un contreépaulement (48) radial et s'étendant parallèlement à l'axe de la vis de la plaque de coupe (16, 18) appliquée contre l'épaulement d'appui (30).

3. Outil de coupe selon la revendication 2, caractérisé en ce que l'écrou de serrage (70) est placé à l'extrémité de la vis de réglage (60) qui est associée à la pointe de l'angle (b) et prend appui axialement sur le corps porte-outils (10) dans la direction de l'ouverture de l'angle.

4. Outil de coupe selon la revendication 3, caractérisé en ce que l'écrou de serrage (70) est logé dans un évidement (44) cylindrique ouvert vers l'extérieur du corps porte-outils (10).

5. Outil de coupe selon l'une des revendications 2 à 4, caractérisé en ce que l'épaulement de serrage (68) axial de la vis de réglage (60) est réalisé à la transition d'une tête de vis (62) munie de surfaces de prise (72) pour un outil de réglage sous la forme d'un segment de tige (66) excentrique formant l'épaulement de serrage (69) radial.

6. Outil de coupe selon l'une des revendications précédentes, caractérisé en ce que deux vis de réglage (60) disposées côte à côte sont prévues pour ajuster et bloquer une plaque de coupe (16, 18) allongée.

7. Outil de coupe selon l'une des revendications précédentes, caractérisé en ce que la plaque de coupe (16, 18) peut être ajustée dans la direction de l'axe par le biais d'un élément de réglage (76) monté dans le corps porte-outils (10) transversalement par rapport à l'étendue longitudinale de ce dernier et de manière rotative et par le biais d'un élément (80), de préférence une bille, qui transforme le mouvement transversal en un mouvement longitudinal.
